# EUROPÄISCHE PATENTANMELDUNG

(11) **EP 0 935 078 A1**
(43) Veröffentlichungstag der Anmeldung: **11.08.1999**
(21) Anmeldenummer: 99100170.2
(22) Anmeldetag: 07.01.1999
(51) Int. Cl.: F16B 31/02, F16B 31/06, F16B 11/00

(54) **Einrichtung zur Erkennung eines überbelastungsbedingten Ermüdungsbruches einer Schraubverbindung**

(30) Priorität: 05.02.1998 DE 19804458
(71) Anmelder: DaimlerChrysler AG, 70567 Stuttgart (DE)
(72) Erfinder: Dirmeier, Georg, 70176 Stuttgart (DE); Emmann, Siegfried, 71384 Weinstadt (DE); Haller, Manfred, 70184 Stuttgart (DE)

(57) **Zusammenfassung**

Die Erfindung betrifft eine Einrichtung zur Erkennung eines überbelastungsbedingten Ermüdungsbruches einer durch einen axialen Kraftfluß zwischen Null und unterschiedlichen Maximalwerten wechselbelastete Schraubverbindung, die aus einer Schraube und einem innengewindetragenden Hohlprofil besteht. Dessen Innengewinde erstreckt sich zumindest über die Länge des Außengewindes der Schraube, wobei die Einrichtung einen vom in Fügerichtung weisenden Verbindungsende ausgehenden, hinteren spielbehafteten Bereich und einen sich an diesen anschließenden, vorderen spielfreien Bereich der Schraube im Hohlprofil beinhaltet. Der Übergang zwischen den Bereichen bildet eine Sollbruchstelle zwischen den beiden Verbindungsenden, an der das Hohlprofil unter Ausbildung eines örtlich definiert in Querrichtung der Schraubverbindung verlaufenden Risses nach einer bestimmten Anzahl von Überbelastungen ermüdungsbedingt bricht. Der Abstand der Sollbruchstelle von den Verbindungsenden ist derart bemessen und das Zusammenwirken der Schraube mit dem Hohlprofil derart gestaltet, daß die Schraube im Hohlprofil nach dem Bruch eine wechselbelastbare Restfügeverbindung ausbildet. Um das Auftreten des Risses am Hohlprofil der Schraubverbindung bei einem ermüdungsbedingten Bruch in einfacher Weise und jederzeit wahrnehmbar zu gestalten, wird vorgeschlagen, daß die Einrichtung zusätzlich ein Mittel beinhaltet, das zumindest auf dem vom spielbehafteten Bereich der Schraubverbindung gebildeten Abschnitt der Restfügeverbindung derart angeordnet ist, daß der Riß seine Zerstörung hervorruft, wodurch das Mittel wenigstens ein visuell oder akustisch wahrnehmbares Signal auslöst.

## Beschreibung

Die Erfindung betrifft eine Einrichtung zur Erkennung eines überbelastungsbedingten Ermüdungsbruches einer Schraubverbindung gemäß dem Oberbegriff des Patentanspruches 1.

Eine gattungsgemäße Einrichtung ist aus der DE 196 37 592 C1 bekannt. Aufgrund der speziellen Ausbildung und Aufteilung der Schraubverbindung in einen axial und radial spielbehafteten und einen spielfreien Bereich wird am Übergang zwischen den Bereichen eine Sollbruchstelle geschaffen, die nach einer bestimmten Anzahl von Überlastungen der Schraubverbindung materialermüdungsbedingt oder bei einer überhöhten Überlastung bricht, wodurch der entstehende Riß lokal definiert quer zur Längserstreckung der Schraubverbindung, also in Umfangsrichtung verläuft. Wenn der spielfreie Bereich vom Schraubenkopf ausgeht und die Abmessungen der Schraube im Vergleich zum Hohlprofil entsprechend ausgelegt werden, bricht das Hohlprofil unter Verbleib einer noch in ausreichendem Maße tragenden Restfügeverbindung zwischen der Schraube und dem Hohlprofil, wobei der Kraftfluß der Belastung nun allein über den jetzt tragenden spielbehafteten Bereich erfolgt. Der Riß ist jedoch bisweilen nicht offensichtlich mit dem bloßen Auge sichtbar und fällt deswegen nicht auf, so daß eine nähere Betrachtung nicht angestrengt wird. Diese erfolgt erst bei einer regelmäßigen Inspektion, bei welcher ein etwaiger Riß durch einschlägige Detektionsgeräte beispielsweise auf Ultraschallbasis oder durch Messung der Leitfähigkeit erfaßt wird. Das Auffinden des Risses wird allerdings dabei durch den a priori bekannten Ort der Sollbruchstelle erleichtert.

Der Erfindung liegt die Aufgabe zugrunde, eine gattungsgemäße Einrichtung dahingehend weiterzubilden, daß das Auftreten des Risses am Hohlprofil der Schraubverbindung bei einem ermüdungsbedingten Bruch in einfacher Weise und jederzeit wahrnehmbar ist.

Die Aufgabe wird erfindungsgemäß durch die Merkmale des Anspruches 1 gelöst.

Dank der Erfindung kann der Riß des Hohlprofiles ohne weiteres festgestellt werden, da dem Betrachter optisch oder akustisch wahrnehmbare Signale zugetragen werden, die auf einen Riß aufmerksam machen. Das Mittel, das diese Signale selbsttätig auslöst, bildet die sich in dem Riß des Hohlprofils zeigende Wirkung der bei der Materialermüdung anstehenden Überbelastung parallel dazu oder kurz auf die Rißbildung folgend nach, indem es aufgrund seines Kontaktes mit beiden Bereichen und seiner Erstreckung auf beide durch den Riß oder bei Anordnung lediglich im Bereich der Restfügeverbindung durch die auf den spielbehafteten Bereich verlagerte Belastung der Schraubverbindung zerstört wird. Bei Zerstörung des Mittels veranlaßt dieses die Ausgabe der genannten Signale. Das Mittel kann denkbar einfach ausgestaltet sein, es muß lediglich zerstört werden können und im Zeitpunkt seiner Zerstörung ein Signal weitergeben können, das die Aufmerksamkeit dessen erregt, der den die Schraubverbindung enthaltenden Gebrauchsgegenstand benutzt. Eine Anzeige des Signals kann vom Mittel selbst oder durch eine separate Anzeigevorrichtung erfolgen, deren Herstellung nur geringen Aufwand bedeutet.

Zweckmäßige Ausgestaltungen der Erfindung können den Unteransprüchen entnommen werden; im übrigen ist die Erfindung anhand eines in den Zeichnungen dargestellten Ausführungsbeispieles nachfolgend näher erläutert; dabei zeigt:
Fig. 1 in einem seitlichen Längsschnitt die Schraubverbindung mit einer erfindungsgemäßen Einrichtung in unbeschädigtem Zustand,
Fig. 2 in einem vergrößerten Ausschnitt die Einzelheit I des spielfreien Abschnittes der Schraubverbindung aus Fig. 1 im Längsschnitt,
Fig. 3 in einem vergrößerten Ausschnitt die Einzelheit II des spielbehafteten Abschnittes der Schraubverbindung aus Fig. 1 im Längsschnitt mit der erfindungsgemäßen Einrichtung,
Fig. 4 in einem seitlichen Längsschnitt die Schraubverbindung von Fig. 1 mit Rißbildung an einer Sollbruchstelle und aus dem Riß tretendem Farbstoff.

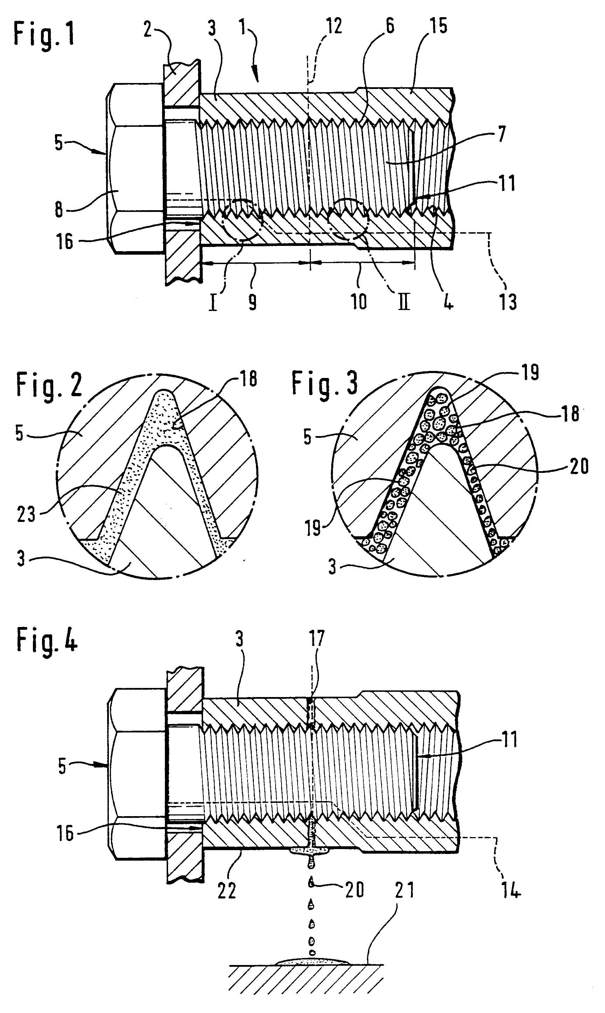

In Fig. 1 ist eine Schraubverbindung 1 dargestellt, die bei Fahrzeugen, insbesondere Nutzfahrzeugen vorzugsweise Sattelzugmaschinen anwendbar sind. Bei letzteren müssen für den Zusammenbau eines Leichtbau-Modulrahmens Vorder- und Hinterachsträger, die als Leichtmetall-Gußlegierungsteile 2 ausgebildet sind, an einem Längsträger-Zwischenmodul, der von mehreren Leichtmetall-stranggepreßen Hohlprofilen 3 gebildet wird, befestigt werden.

Das Hohlprofil 3 weist dazu ein Innengewinde 4 auf, in das die Schraube 5 mit dem Außengewinde 6 ihres Schaftes 7 eingeschraubt ist. Die Schraube 5 ist über eine Teillänge ihres Schaftes 7 vom Anfang des Eingriffes der Gewinde 6,4 in der Nähe des Schraubenkopfes 8, also vom vorderen Verbindungsende 16 an mit dem Hohlprofil 3 zusätzlich verklebt (Fig. 2), wobei der Kleber 23 aushärtet und dadurch die Schraubverbindung 1 in einen vorderen spielfreien 9 und einen sich unmittelbar an diesen anschließenden, hinteren spielbehafteten Bereich 10 aufteilt. Für eine ausreichende Belastbarkeit einer Aluminium-Schraubverbindung 1 ist es erforderlich, daß die Überlappungslänge von Hohlprofil 3 und Schraube 5 zumindest das 2,5-fache des Schraubendurchmessers beträgt, damit die zulässige Flächenpressung bzw. die Streckgrenze der Schraube 5 nicht überschritten wird. Bei einer Stahl-Schraubverbindung liegt die Mindestüberlappungslänge im Bereich vom 1,1-fachen des Schraubendurchmessers.

Im spielfreien Bereich 9 ist die Schraubverbindung 1 sehr steif und von sehr geringer Elastizität insbesondere in axialer Richtung der Schraubverbindung 1, derart, daß sie die geringe Dehnfähigkeit der Schraubverbindung 1 am in Fügerichtung weisenden Verbindungsende 11 übertrifft. An diesem Verbindungsende 11 entsteht aufgrund der geringen axialen Dehnfähigkeit der Verbindung normalerweise bei Überbelastung eine Spannungsüberhöhung, was nach einiger Zeit zu einer Ermüdung und damit zu einem Abriß der Schraubverbindung führt. Infolge der Ausbildung eines spielfreien Bereiches 9 wird die Spannungsüberhöhung bei Überbelastung der Schraubverbindung auf den Übergang 12 des spielfreien Bereiches 9 zum spielbehafteten Bereich 10 verschoben, so daß durch den sprunghaften Übergang 12 quasi eine Sollbruchstelle geschaffen wird, an der jedoch nur einer der beiden Fügepartner, der Schraube 5 und des Hohlprofiles 3, - je nach Dimensionierung der Dicke der Schraube 5 und der Wandstärke des Hohlprofiles 3 relativ zueinander - in axialer Richtung örtlich begrenzt in Umfangsrichtung bricht. Die Verbindung bleibt jedoch tragfähig, wobei die Länge der Schraube 5 im Hohlprofil 3 in dem Bereich der Verbindung, der die Funktionsfähigkeit noch erfüllt, ausreichend sein muß.

Zu einem völligen Abriß der Schraubverbindung 1 kommt es deswegen nicht, weil diese einen spielbehafteten Bereich 10 besitzt, der nach der Rißbildung am Übergang 12 die Tragfunktion der Schraubverbindung 1 allein übernehmen kann. Dies wird verdeutlicht durch die punktiert dargestellten Kraftflußlinien 13 und 14 der Fig. 1 und 4. In Fig. 1 tritt der Kraftfluß der Schraubverbindung 1 bei normaler schadensfreier Beanspruchung im spielfreien Bereich 9 von der Schraube 5 auf das Hohlprofil 3 über und verläuft in diesem weiter. Nach der rißbildenden Überbelastung verläuft gemäß Fig. 4 der Kraftfluß bis in den ursprünglichen spielbehafteten Bereich 10 hinein, um dann erst auf das Hohlprofil 3 überzutreten.

Um den die Sollbruchstelle bildenden Übergang 12 zu schaffen, ist es auch denkbar, die Schraube 5 mit einem Kleber nur auf einem schmalen Umfangsstreifen zu versehen, der dann den Übergang 12 zu zwei spielbehafteten Bereichen 10 - jeweils einer vor und hinter dem Übergang 12 - bildet.

Wie aus beiden Fig. 1 und 4 zu erkennen ist, weist das Hohlprofil 3 am Verbindungsende 11 eine umlaufende Wandverdickung 15 auf, die eine Erhöhung der Stabilität der Verbindung an dieser Stelle bewirken soll, so daß das Verlagern eines Risses 17 auf die Sollbruchstelle begünstigt wird. Des weiteren kann durch die Anbringung einer umlaufenden Kerbe am Umfang des Hohlprofiles 3 an der Stelle des Überganges 12 die Lokalisierung des Risses 17 weiter verstärkt werden.

Es ist auch denkbar, daß die Schraubverbindung 1 am in Fügerichtung weisenden Verbindungsende 11 keine Wandverdickung 15 aufweist. Um der die Haltbarkeit der Schraubverbindung 1 negativ beeinträchtigenden Kerbwirkung entgegenzutreten und um somit die Lebensdauer der Schraubverbindung 1 zu erhöhen ist die gewindetragende Bohrung des Hohlprofiles 3 am Verbindungsende 11 eine glattzylindrische axiale Erweiterung, einem sogenannten "Freistich" vorgesehen, die mit großem Rundungsradius faßartig ausgerundet ist.

Die Ausbildung eines spielfreien Bereiches 9 ist auf vielfältige Weise möglich. Wie oben angesprochen kann die Schraube 5 mit dem Hohlprofil 3 verklebt sein. Günstig ist dazu ein mikroverkapselter Zwei-Komponenten-Kleber, der in den Gewindegängen der Schraube 5 verteilt ist. Beim Einschrauben zerplatzen infolge der dabei auftretenden Scherkräfte die jeweils eine Kleberkomponente beinhaltenden Kapseln, wobei die Kleberkomponenten sich vermischen und nach der Aushärtung eine besonders feste und steife Klebeverbindung der beiden Fügepartner ausbilden.

Alternativ ist auch eine Schraube mit auf einem Teilabschnitt selbstfurchendem Gewinde denkbar, wobei der Innendurchmesser der Bohrung des Hohlprofiles 3 auf diesem Abschnitt kleiner sein muß als der Außendurchmesser des Außengewindes 6. Des weiteren ist es alternativ denkbar, daß auf einem Teilabschnitt des Außengewindes 6 der Schraube 5 eine eine metallische Zwischenlage, wie beispielsweise ein Metallfolienstreifen oder ein Litzenband aufgelegt ist, mit der die Schraube 5 in das Hohlprofil 3 eingeschraubt wird, wobei mit diesem Teilabschnitt der spielfreie Bereich 9 gebildet wird. Nichtmetallische Zwischenlagen wie Hanf oder ein Kunststoffolienstreifen können dabei ersatzweise ebenfalls zur Anwendung kommen.

Der Riß 17 erfolgt also entlang des Überganges 12 in Umfangsrichtung der Schraubverbindung 1, welche so ausgelegt, daß die Wandstärke des Hohlprofiles 3 relativ klein zur Schraubendicke ist, wonach das Hohlprofil 3 am Übergang 12 bricht. Um den Riß 17 deutlich wahrnehmbar zu machen, ist an der Schraubverbindung 1 ein Mittel vorgesehen, das erkennbare Signale auslöst, die auch einer oberflächlichen Betrachtung nicht entgehen.

Wie aus Fig. 3 zu entnehmen ist, ist das Mittel im spielbehafteten Bereich 10 der Schraubverbindung 1 in den Gewindegängen 18 der Schraube 5 oder des Innengewindes 4 des Hohlprofiles 3 eingelagert und in Form von Mikrokapseln 19 ausgebildet, die einen fluidischen Farbstoff 20, vorzugsweise eine Flüssigkeit enthalten. Bei Rißbildung des Hohlprofiles 3 erfolgt ein Kraftflußwechsel vom spielfreien 9 auf den spielbehafteten Bereich 10 der Schraubverbindung 1, worauf die Mikrokapseln 19 aufgrund der Wechselbelastung des nun den Kraftfluß führenden spielbehafteten Bereiches 10 der Schraubverbindung 1 zerquetscht werden. Der aus den Mikrokapseln 19 nunmehr befreite fluide Farbstoff 20 tritt über den Spielspalt zwischen der Schraube 5 und dem Hohlprofil 3 an der Sollbruchstelle des Hohlprofiles 3 aus diesem aus, und tropft gemäß Fig. 4 auf in der Umgebung der Schraubverbindung 1 liegende Bauteilflächen 21. Es ist genauso denkbar, daß der austretende Farbstoff 20 an der Außenseite 22 des Hohlprofiles 3 im wesentlichen an der Rißstelle konzentriert anhaftet, wobei er mit seiner von der der Verbindungspartner 3,5 der Schraubverbindung 1 unterschiedlichen Farbe das optisch wahrnehmbare Signal bildet. Der Kontrast zwischen der Farbe des Farbstoffes 20 und der der Verbindungspartner 3,5 bzw. der der Bauteilflächen 21 soll in günstiger Weise erheblich sein, so daß ein Auffallen gewährleistet ist. Des weiteren sollte die Farbe intensiv sein. Sie kann auch fluoreszierend bzw. derart beschaffen sein, so daß auch nachts, d.h. bei Dunkelheit ein Riß 17 erkannt werden kann. Anstelle des Farbstoffes 20 kann auch ein geruchsintensiver Duftstoff verwendet werden, der durch seine Penetranz leicht auf den Schadensfall der Schraubverbindung 1 hinweist. Bei der Verwendung von Mikrokapseln 19 ist vorteilig, daß diese vom Anordnungsaufwand her nach Einlagerung in deren Gewindegängen 18 in einfacher Weise mit Einschrauben der Schraube 5 in das Hohlprofil 3 auf der Verbindungsstrecke zerstörungsbereit positioniert sind. Des weiteren wird keine zusätzliche bauraumerfordernde Signalanzeigevorrichtung benötigt, da das optisch wahrnehmbare Signal von der Farbstoffarbe des in den Mikrokapseln 19 befindlichen fluidischen Farbstoffes 20 durch Anhaften an der Außenseite 22 des Hohlprofiles 3 selbst ausgegeben wird; vorausgesetzt, es besteht ein Farbkontrast mit der Umgebung.

Alternativ zu den mit Farbstoff 20 angefüllten im spielbehafteten Bereich 10 der Schraubverbindung 1 eingelagerten Mikrokapseln 19 kann das Mittel auch ein mit einem unter Druck stehenden Gas angefüllter Hohlraum sein, der zumindest bis zum Übergang 12, an dem das Hohlprofil 3 bricht, im spielbehafteten Bereich 10 angeordnet ist. Der Hohlraum kann vom Spielspalt des Bereiches 10 gebildet sein. Denkbar ist auch, daß das Hohlprofil 3 selbst ausgehöhlt ist und die den Hohlraum bildende ringförmige Höhlung sich sowohl über den spielbehafteten 10 als auch über den spielfreien Bereich 9 hinweg erstreckt. Bei einem Riß 17 tritt das unter Druck stehende Gas aus dem Hohlprofil 3 aus, wodurch ein Druckabfall in dem Hohlraum entsteht. Der Hohlraum ist zur Detektion dieses Druckabfalles mit einer Druckmeßdose verbunden, welche im Falle eines Druckabfalles ein elektrisches Spannungssignal ausgibt, das über einen elektrischen Stromkreis als Tonsignal, beispielsweise durch Ansprechen eines Summers im Fahrerhaus, oder als Lichtsignal durch Aufleuchten einer Kontrollampe im Armaturenbrett des Fahrzeuges wiedergegeben wird. Das optisch oder akustisch wahrnehmbare Signal kann ein Dauersignal oder auch mehrere Signalpulse mit erkennbarem Abstand zwischen den Pulsen sein. Anstelle des unter Druck stehenden Gases kann im Hohlraum auch ein Unterdruck herrschen, dessen Änderung auf Atmosphärendruckniveau bei einem Riß 17 ebenfalls von einer Druckmeßdose detektiert werden kann.

Eine weitere Alternative zu dem Mittel in Form von Mikrokapseln 19 und der oben geschilderten Druckmessung besteht in einem Reißdraht, der in einen elektrischen Stromkreis der Einrichtung integriert ist. Der Reißdraht ist an der Außenseite 22 des Hohlprofiles 3 angebracht, vorzugsweise festgeklebt, wobei er die Stelle des zu erwartenden Risses 17 längs der Erstreckung der Schraubverbindung 1 überspannt. Durch den sich bildenden Riß 17 des Hohlprofiles 3 wird dann gleichsam auch der Reißdraht gerissen. Die Unterbrechung wirkt sich als Schaltsignal im elektrischen Stromkreis aus, welches bei einem im Stromkreis befindlichen Verbraucher ein akustisches oder optisches Signal auslöst. Dieses Signal kann wie in der oben erwähnten Druckabfallmessung gestaltet sein.

Durch die beiden letztgenannten prinzipiellen Ausführungsbeispiele ist in vorteilhafter Weise eine "on-board"-Erkennung eines Ermüdungsbruches und somit über den Zustand der Schraubverbindung 1 innerhalb des Fahrzeuges mit einer nur geringen Anzahl an das Mittel beinhaltenden Bauteilen möglich, d.h. der Fahrer erkennt die Rißbildung der Schraubverbindung 1 schon während des Eintretens dieses Ereignisses. Bei allen drei Beispielen braucht man nicht die erst nach einem bestimmten Zeitintervall erfolgende Inspektion abzuwarten, um Aufschluß über den Zustand der Schraubverbindung zu erhalten. Vielmehr kann im erkannten Schadensfall mit anschließendem Aufsuchen einer Reparaturwerkstatt verhindert werden, daß durch Abwarten der Funktionsüberprüfung bis zur nächsten vorbestimmten Wartung ein endgültiger Bruch der Schraubverbindung während des Fahrbetriebes auftritt, der eventuell eine mehr oder minder schwerwiegende Verunfallung des Fahrzeuges zur Folge haben kann.

Resümierend wird erfindungsgemäß also eine Schraubverbindung vorgeschlagen, die in Bereiche unterschiedlicher axialer Dehnfähigkeit des in den als Hohlprofil 3 ausgestalteten äußeren Fügepartner eingebrachten inneren Fügepartners 5,19 in der Verbindung getrennt, wobei die Änderung der Dehnfähigkeit an der Stelle des Übergangs 12 der Bereiche ineinander sprunghaft erfolgt. An diesem Übergang 12 treten nun anstatt am in Fügerichtung weisenden Ende 11 der Verbindung bei Überlastungen Spannungsüberhöhungen auf, durch welche ermüdungsbedingt nach einer bestimmten Anzahl von Belastungsspielen dort ein Riß 17 an einem der beiden Fügepartner je nach Auslegung des Verhältnisses der Wandstärke des Profiles 3 zur Dicke der Schraube 5 entsteht. Ein Ermüdungsbruch am in Fügerichtung weisenden Ende der Verbindung wird dadurch zeitlich hinausgezögert. Der Bereich der Schraubverbindung zwischen einem Riß 17 am Profil 3 und dem Ende der Schraubverbindung 11 weist nach dieser Rißbildung für weitere Wechselbelastungen in Fügerichtung noch ausreichende Trägfähigkeit auf. Erst zu einem späteren Zeitpunkt tritt am Verbindungsende 11 in Fügerichtung aus genannten Gründen eine Rißbildung auf, die die tragfähige Verbindung schließlich vollends zerstört. Der Übergang 12 zwischen den Bereichen 9,10 stellt eine örtlich gezielt eingerichtete Sollbruchstelle dar, an der das Auftreten eines hinsichtlich des die Schraubverbindung auflösenden Risses vorausgehenden ersten, axial mit Abstand zu diesem versetzten Risses 17 als Indikator für den Belastbarkeitszustand der Schraubverbindung und damit als Hinweis auf ein späteres völliges Versagen der Schraubverbindung fungiert. Um ein Erkennen des Risses 17 sicher zu festzustellen, sind die erwähnten Mittel vorgesehen, die aufgrund ihrer parallel mit der Rißbildung oder in Folge dieser ablaufenden Zwangszerstörung deutlich optisch oder akustisch erkennbare Signale auslösen.

## Patentansprüche

1. Einrichtung zur Erkennung eines überbelastungsbedingten Ermüdungsbruches einer durch einen axialen Kraftfluß zwischen Null und unterschiedlichen Maximalwerten wechselbelastete Schraubverbindung, die aus einer Schraube und einem innengewindetragenden Hohlprofil besteht, dessen Innengewinde sich zumindest über die Länge des Außengewindes der Schraube erstreckt, welche Einrichtung einen vom in Fügerichtung weisenden Verbindungsende ausgehenden, hinteren spielbehafteten Bereich und einen sich an diesen anschließenden, vorderen spielfreien Bereich der Schraube im Hohlprofil beinhaltet, wobei der Übergang zwischen den Bereichen eine Sollbruchstelle zwischen den beiden Verbindungsenden bildet, an der das Hohlprofil unter Ausbildung eines örtlich definiert in Querrichtung der Schraubverbindung verlaufenden Risses nach einer bestimmten Anzahl von Überbelastungen ermüdungsbedingt bricht, und wobei der Abstand der Sollbruchstelle von den Verbindungsenden derart bemessen und das Zusammenwirken der Schraube mit dem Hohlprofil derart gestaltet ist, daß die Schraube im Hohlprofil nach dem Bruch eine wechselbelastbare Restfügeverbindung ausbildet,
**dadurch gekennzeichnet,**
daß die Einrichtung zusätzlich ein Mittel beinhaltet, das zumindest auf dem vom spielbehafteten Bereich (10) der Schraubverbindung (1) gebildeten Abschnitt der Restfügeverbindung derart angeordnet ist, daß der Riß (17) seine Zerstörung hervorruft, wodurch das Mittel wenigstens ein visuell oder akustisch wahrnehmbares Signal auslöst.

2. Einrichtung nach Anspruch 1,
**dadurch gekennzeichnet,**
daß das Mittel im spielbehafteten Bereich (10) der Schraubverbindung (1) in den Gewindegängen (18) eingelagerte Mikrokapseln (19) sind, die einen fluidischen Farbstoff (20) enthalten, wobei bei Rißbildung des innengewindetragenden Hohlprofiles (3) an der Sollbruchstelle der Farbstoff (20) aus den aufgrund der Wechselbelastung des nun den Kraftfluß führenden spielbehafteten Bereiches (10) der Schraubverbindung (1) zerquetschten Mikrokapseln (19) austritt und an der Außenseite (22) des Hohlprofiles (3) im wesentlichen an der Rißstelle konzentriert anhaftet und mit seiner von der der Verbindungspartner (3,5) der Schraubverbindung (1) unterschiedlichen Farbe das optisch wahrnehmbare Signal bildet.

3. Einrichtung nach Anspruch 1,
**dadurch gekennzeichnet,**
daß das Mittel ein mit einem unter Druck stehenden Gas angefüllter, mit dem spielbehafteten Bereich (10) verbundener Hohlraum ist, und daß die Einrichtung eine Druckmeßdose beinhaltet, die mit dem Hohlraum in Kontakt steht und die im Falle eines Risses (17) anläßlich des sich im Hohlraum ergebenden Druckabfalles ein zumindest ein Ton- oder Lichtsignal erzeugendes Spannungssignal ausgibt.

4. Einrichtung nach Anspruch 1,
**dadurch gekennzeichnet,**
daß das Mittel ein in einen elektrischen Stromkreis der Einrichtung integrierter Reißdraht ist, der an der Außenseite (22) des Hohlprofiles (3) derart angebracht ist, daß er die Stelle des zu erwartenden Risses (17) längs der Erstreckung der Schraubverbindung (1) überspannt, wobei der Reißdraht mit dem Reißen des Hohlprofiles (3) reißt und dabei bei einem im Stromkreis befindlichen Verbraucher ein akustisches oder optisches Signal auslöst.
